# EUROPEAN PATENT SPECIFICATION

(11) **EP 3 973 011 B1**
(45) Date of publication and mention of the grant of the patent: **20.08.2025**
(21) Application number: 20725003.6
(22) Date of filing: 17.04.2020
(51) Int. Cl.: C08G 59/40, C09D 163/00, C08G 59/50, C08G 59/68

(54) **EPOXY ADHESIVE COMPOSITION AND METHOD OF USE**
EPOXIDKLEBSTOFFZUSAMMENSETZUNG UND VERWENDUNGSVERFAHREN
COMPOSITION ADHÉSIVE ÉPOXY ET PROCÉDÉ D'UTILISATION

(30) Priority: 21.05.2019 US 201962850625 P
(43) Date of publication of application: 30.03.2022
(73) Proprietor: DDP Specialty Electronic Materials US, LLC, Wilmington, DE 19805 (US)
(72) Inventor: KOCH, Felix, 8807 Freienbach (CH); STEINER, Beda, 8807 Freienbach (CH); LUTZ, Andreas, 8807 Freienbach (CH)
(74) Representative: Abitz & Partner
(86) International application number: PCT/US2020/028758
(87) International publication number: WO 2020/236366

(56) References cited:
- WO-A1-2016/108958
- WO-A1-2017/044401
- WO-A1-2018/156450
- US-A1- 2017 335 147

## Description

### FIELD OF THE INVENTION

This invention relates to a method to use an epoxy adhesive composition. The epoxy adhesive composition comprises an epoxy resin, a reactive urethane group- and/or urea group-containing polymer having capped isocyanate, an epoxy curing catalyst, a dicyandiamide, and a hardener. Said epoxy adhesive composition, when used in the claimed method, combines the benefits of both 1K and 2K technologies in one system and demonstrates a good balance of fast fixation, curing speed, desirable mechanical performance, durability, and good oil adsorption once cured.

### BACKGROUND OF THE INVENTION

In automotive industry, 1K structural epoxy adhesives are used to bond metals in the body shop. These are cured at high temperature, for example for 30 minutes at 180°C, in an e-coat oven. Prior to the oven cure the adhesives show little to no mechanical strength sufficient for part fixation. If part fixation is desired, the adhesives need to be combined with an additional method of fixation typically mechanical fixation such as spot welds or rivets.

In areas such as hang on parts like doors and hoods where the parts are flanged, the lack of mechanical strength of the adhesive prior to the e-coat can result in dimensional distortion due to part movement in the oven. To prevent this some OEMs use 2K structural adhesives which build up strength at room temperature or can be pre-cured up to handling strength at already low temperatures such as 80°C to 120°C to strength levels of greater than 0.2MPa.

While this fast cure of a 2K structural epoxy adhesive is an advantage for dimensional stability, this is a disadvantage with respect to oil absorption. A 2K adhesive can only absorb oils in case it sees a temperature treatment directly after application (for example, between 5 minutes to 1 hour). Otherwise the network formation is progressed to far to allow for the oil to diffuse and dissolve in the epoxy adhesive at elevated temperature resulting poor failure mode after artificial aging or even initial already. US 2017/0335147 describes a 2K epoxy adhesive that has rapid cure time and good strength characteristics.

Benefits of 1K structural epoxy adhesives are they have excellent oil absorption, outstanding mechanical performance and durability, outperforming any 2K structural epoxy adhesive.

It would be desirable to have an epoxy adhesive composition that combine the benefits of both 1K and 2K technologies in one system which demonstrates a good balance of fast fixation, curing speed, desirable mechanical performance, durability, and good oil adsorption once cured for use in a method of applying epoxy adhesive.

### SUMMARY OF THE INVENTION

The present invention is a method to apply a first epoxy adhesive composition and second epoxy adhesive composition to a substrate comprising the steps of: 1) applying the first epoxy adhesive composition to a substrate wherein the composition comprises in admixture: A) one or more epoxy resin wherein said one or more epoxy resin is a liquid at 23°C, B) one or more reactive urethane group- and/or urea group-containing polymer having capped isocyanate, C) an epoxy curing catalyst, and D) a dicyandiamide and 2) applying the second epoxy adhesive composition to the substrate wherein the second epoxy adhesive composition comprises in admixture: A) one or more epoxy resin wherein said one or more epoxy resin is a liquid at 23°C, B) one or more reactive urethane group- and/or urea group-containing polymer having capped isocyanate, C) an epoxy curing catalyst, D) dicyandiamide, and E) a hardener, preferably steps 1 and 2 are repeated two or more times, more preferably, components A), B), C), and D), of the first epoxy adhesive composition are the same as components A), B), C), and D) of the second epoxy adhesive composition further comprising the step, between step 1 and step 2 of mixing the hardener E) into the first epoxy adhesive compositing to make the second epoxy adhesive composition. The epoxy adhesive compositions according to step 1 and step 2 both have a lap shear strength according to DIN EN 1465:2009-07 of greater than 15 MPa after curing for 25 minutes at 165°C both measured on the combination of hot dip galvanized steel DX56D 0.8 mm thick and electro galvanized steel DC 04 in a thickness of 0.8 mm (DIN EN 10346:2015-10).

### DETAILED DESCRIPTION OF THE INVENTION

The epoxy adhesive composition used in the present invention contains at least one epoxy resin (Component A). In one embodiment, the epoxy resin is non-rubber-modified and/or is non-phosphorus-modified. By "non-rubber-modified", it is meant that, prior to curing, the epoxy resin is not chemically bonded to a rubber as described below.

By "non-phosphorus-modified", it is meant that, prior to curing the adhesive, the epoxy resin has not been reacted with phosphoric acid, a polyphosphoric acid, a phosphoric or polyphosphoric acid salt, or a phosphoric acid or polyphosphoric acid ester.

If only a single epoxy resin is present, it is a liquid at 23°C. If two or more epoxy resins are present, the mixture thereof is a liquid at 23°C, although individual epoxy resins within the mixture may be by themselves solids at 23°C.

A wide range of epoxy resins can be used, including those described at column 2 line 66 to column 4 line 24 of USP 4,734,332. The epoxy resin should have an average of at least 1.8, preferably at least 2.0, epoxide groups per molecule. The epoxy equivalent weight may be, for example, 75 to 350, 140 to 250 and or 150 to 225. If a mixture of epoxy resins is present, the mixture should have an average epoxy functionality of at least 1.8, preferably at least 2.0, and an epoxy equivalent weight as in the previous sentence, and more preferably each epoxy resin in the mixture has such an epoxy functionality and epoxy equivalent weight.

Suitable epoxy resins include diglycidyl ethers of polyhydric phenol compounds such as resorcinol, catechol, hydroquinone, biphenol, bisphenol A, bisphenol AP (1,1-bis(4-hydroxylphenyl)-1-phenyl ethane), bisphenol F, bisphenol K and tetramethylbiphenol; diglycidyl ethers of aliphatic glycols such as the diglycidyl ethers of C₂₋₂₄ alkylene glycols; polyglycidyl ethers of phenol-formaldehyde novolac resins (epoxy novolac resins), alkyl substituted phenol-formaldehyde resins, phenol-hydroxybenzaldehyde resins, cresol-hydroxybenzaldehyde resins, dicyclopentadiene-phenol resins and dicyclopentadiene-substituted phenol resins; and any combination of any two or more thereof.

Suitable epoxy resins include diglycidyl ethers of bisphenol A resins such as are sold by Olin Corporation under the designations D.E.R. 330, D.E.R. 331, D.E.R. 332, D.E.R. 383, D.E.R. 661 and D.E.R. 662 resins.

Epoxy novolac resins can be used. Such resins are available commercially as D.E.N. 354, D.E.N. 431, D.E.N. 438 and D.E.N. 439 from Olin Corporation.

Other suitable epoxy resins are cycloaliphatic epoxides. A cycloaliphatic epoxide includes a saturated carbon ring having an epoxy oxygen bonded to two vicinal atoms in the carbon ring, as illustrated by the following structure I: 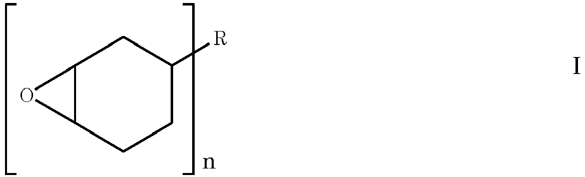 wherein R is an aliphatic, cycloaliphatic and/or aromatic group and n is a number from 1 to 10, preferably from 2 to 4. When n is 1, the cycloaliphatic epoxide is a monoepoxide. Di- or polyepoxides are formed when n is 2 or more. Mixtures of mono-, di- and/or polyepoxides can be used. Cycloaliphatic epoxy resins as described in USP 3,686,359 may be used in the present invention. Cycloaliphatic epoxy resins of particular interest are (3,4-epoxycyclohexyl-methyl)-3,4-epoxy-cyclohexane carboxylate, bis-(3,4-epoxycyclohexyl) adipate, vinylcyclohexene monoxide and mixtures thereof.

Other suitable epoxy resins include oxazolidone-containing compounds as described in USP 5,112,932. In addition, an advanced epoxy-isocyanate copolymer such as those sold commercially as D.E.R. 592 and D.E.R. 6508 (Dow Chemical) can be used.

In some embodiments, the epoxy resin includes a first diglycidyl ether of a bisphenol that has an epoxy equivalent weight of up to 225 and a second diglycidyl ether of a bisphenol that has an epoxy equivalent weight of greater than 225 to 750. The first diglycidyl bisphenol ether may be by itself a liquid at 23°C and the second may be by itself a solid at 23°C, provided the mixture is a liquid at that temperature. Each of these may be diglycidyl ethers of bisphenol-A or bisphenol-F, which may be partially advanced to obtain epoxy equivalent weights as indicated.

Component B) is one or more reactive urethane group- and/or urea group-containing polymers having a number average molecular weight of up to 35,000, at least one polyether or diene rubber segment having a weight of at least 1000 atomic mass units, and capped isocyanate groups. Useful such materials are described, for example, in USP 5,202,390, USP 5,278,257, WO 2005/118734, WO 2007/003650, WO2012/091842, US Published Patent Application No. 2005/0070634, US Published Patent Application No. 2005/0209401, US Published Patent Application 2006/0276601, EP-A-0 308 664, EP 1 498 441A, EP-A 1 728 825, EP-A 1 896 517, EP-A 1 916 269, EP-A 1 916 270, EP-A 1 916 272 and EP-A-1 916 285.

Other tougheners, component (b), useful in the present invention may include for example, PU-tougheners derived from hexamethylene diisocyanate (HDI), polytetramethylene ether glycol (PTMEG) - chain extended with bisphenol A and capped with diisopropylamine. For example, the tougheners useful in the present invention may include the tougheners described in publication WO 2016/108958 A1, available under the product name "RAM DIPA", "Flexibilizer DY 965" "INT LMB6633" or from The Dow Chemical Company.

Component B) materials are conveniently made in a process that includes the steps of forming an isocyanate-terminated polyether and/or diene rubber and capping the isocyanate groups with a phenol or polyphenol. The isocyanate-terminated polyether and/or diene rubber is conveniently made by reacting a hydroxyl- or amine-terminated polyether, a hydroxyl- or amine-terminated diene rubber, or a mixture of both, with an excess of a polyisocyanate to produce adducts that have urethane or urea groups and terminal isocyanate groups. If desired, the isocyanate-terminated polyether and/or diene rubber can be chain-extended and/or branched simultaneously with or prior to performing the capping reaction.

The isocyanate-terminated polyether or isocyanate-terminated diene polymer can have aromatic or aliphatic isocyanate groups. The polyisocyanate used in preparing this material preferably has at least 2 isocyanate groups per molecule and a molecular weight of up to 300 g/mol. It may be an aromatic polyisocyanate such toluene diamine or 2,4'- and/or 4,4'-diphenylmethane diamine, or an aliphatic polyisocyanate such as isophorone diisocyanate, 1,6-hexamethylene diisocyanate, hydrogenated toluene diisocyanate, hydrogenated methylene diphenylisocyanate (H₁₂MDI), and the like.

The hydroxyl- or amine-terminated polyether may be a polymer or copolymer of one or more of tetrahydrofuran (tetramethylene oxide), 1,2-butylene oxide, 2,3-butylene oxide, 1,2-propylene oxide and ethylene oxide, with polymers or copolymers of at least 70 weight-%, based on the total weight of the polymer or copolymer, of tetrahydrofuran, 1,2-butylene oxide, 2,3-butylene oxide and 1,2-propylene oxide being preferred. Polymers of at least 80 weight-% tetrahydrofuran, based on the total weight of the polymer or copolymer, are especially preferred. The starting polyether preferably has 2 to 3, more preferably 2, hydroxyl and/or primary or secondary amino groups per molecule. The starting polyether preferably has a number average molecular weight of 900 to 8000, more preferably 1500 to 6000 or 1500 to 4000.

The hydroxyl- or amine-terminated diene polymer preferably has a glass transition temperature, prior to reaction with the polyisocyanate, of no greater than -20°C and preferably no greater than -40°C. The diene polymer is a liquid homopolymer or copolymer of a conjugated diene, especially a diene/nitrile copolymer. The conjugated diene is preferably butadiene or isoprene, with butadiene being especially preferred. The preferred nitrile monomer is acrylonitrile. Preferred copolymers are butadiene-acrylonitrile copolymers. The rubbers preferably contain, in the aggregate, no more than 30 weight percent polymerized unsaturated nitrile monomer, and preferably no more than about 26 weight percent polymerized nitrile monomer. The hydroxyl- or amine-terminated diene polymer preferably has 1.8 to 4, more preferably 2 to 3, hydroxyl and/or primary or secondary amino groups per molecule. The starting diene polymer preferably has a number average molecular weight of 900 to 8000, more preferably 1500 to 6000 and still more preferably 2000 to 3000.

The isocyanate-terminated polymer is conveniently prepared by the reaction of the foregoing polyisocyanate with the hydroxyl- or amine-terminated polyether and/or hydroxyl- or amine-terminated diene rubber, at a ratio of at least 1.5 equivalents, preferably 1.8 to 2.5 equivalents or 1.9 to 2.2 equivalents, of polyisocyanate per equivalent of hydroxyl and/or primary or secondary amino groups on the starting polyether or diene rubber.

The reaction to form the isocyanate-terminated polymers can be performed by combining the starting polyether and/or diene rubber with the polyisocyanate and heating to 60 to 120°C, optionally in the presence of a catalyst for the reaction of isocyanate groups with the isocyanate-reactive groups of the polyether or diene polymer. The reaction is continued until the isocyanate content is reduced to a constant value or to a target value, or until the amino- and or hydroxyl groups of the starting polyether or diene polymer are consumed.

If desired, branching can be performed by adding a branching agent into the reaction between the starting polyether or diene polymer and the polyisocyanate, or in a subsequent step. The branching agent, for purposes of this invention, is a polyol or polyamine compound having a molecular weight of up to 599, preferably from 50 to 500, and at least three hydroxyl, primary amino and/or secondary amino groups per molecule. If used at all, branching agents generally constitute no more than 10%, preferably no more than 5% and still more preferably no more than 2% of the combined weight of the branching agent and the starting polyether or diene polymer. Examples of branching agents include polyols such as trimethylolpropane, glycerin, trimethylolethane, ethylene glycol, diethylene glycol, propylene glycol, dipropylene glycol, sucrose, sorbitol, pentaerythritol, triethanolamine, diethanolamine and the like, as well as alkoxylates thereof having a number average molecular weight of up to 599, especially up to 500.

Chain extension can be performed if desired by i) incorporating a chain extender into the reaction which forms the isocyanate-terminated polyether and/or diene polymer or ii) reacting the isocyanate-terminated polyether and/or diene polymer with a chain extender before or while performing the capping step. Chain extenders include polyol or polyamine compounds having a molecular weight of up to 749, preferably from 50 to 500, and two hydroxyl, primary amino and/or secondary amino groups per molecule. Examples of suitable chain extenders include aliphatic diols such as ethylene glycol, diethylene glycol, triethylene glycol, propylene glycol, dipropylene glycol, tripropylene glycol, 1,4-butanediol, 1,6-hexane diol, cyclohexanedimethanol and the like; aliphatic or aromatic diamines such as ethylene diamine, piperazine, aminoethylpiperazine, phenylene diamine, diethyltoluenediamine and the like, and compounds having two phenolic hydroxyl groups such resorcinol, catechol, hydroquinone, bisphenol, bisphenol A, bisphenol AP (1,1-bis(4-hydroxylphenyl)-1-phenyl ethane), bisphenol F, bisphenol K, bisphenol M, tetramethylbiphenol and o,o'-diallyl-bisphenol A, and the like. Among these, the compounds having two phenolic hydroxyl groups are preferred.

The isocyanate groups of the isocyanate-terminated polyether or diene polymer are capped by reaction with a capping agent. Suitable capping agents are described, for example, in WO 2017/044359, and include various mono- and polyphenol compounds as described more below, as well as various amine compounds, benzyl alcohol, hydroxy-functional acrylate or methacrylate compounds, thiol compounds, alkyl amide compounds having at least one amine hydrogen such as acetamide, and ketoxime compounds.

In some embodiments, at least 90% of the isocyanate groups, more preferably at least 95% of the isocyanate groups, are capped with a monophenol or polyphenol. Examples of monophenols include phenol, alkyl phenols that contain one or more alkyl groups that each may contain from 1 to 30 carbon atoms, a halogenated phenol, cardanol, or naphthol. Suitable polyphenols contain two or more, preferably two, phenolic hydroxyl groups per molecule and include resorcinol, catechol, hydroquinone, biphenol, bisphenol A, bisphenol AP (1,1-bis(4-hydroxylphenyl)-1-phenyl ethane), bisphenol F, bisphenol K, bisphenol M, tetramethylbiphenol and o,o'-diallyl-bisphenol A, as well as halogenated derivatives thereof. In such embodiments, up to 10%, preferably at most 5%, of the isocyanate groups may be capped with other capping agents such as mentioned above.

The capping reaction can be performed under the general conditions described already, i.e., by combining the materials in the stated ratios and allowing them to react at room temperature or an elevated temperature such as 60 to 120°C, optionally in the presence of a catalyst for the reaction of isocyanate groups with the isocyanate-reactive groups of the capping agent. The reaction is continued until the isocyanate content is reduced to a constant value, which is preferably less than 0.1% by weight. Fewer than 3%, preferably fewer than 1%, of the isocyanate groups may remain uncapped.

The capping reaction can be performed at the same time the isocyanate-terminated polyether and/or diene polymer is formed, or as a separate capping step.

The resulting Component B) material suitably has a number average molecular weight of at least 3000, preferably at least 4,000, to about 35,000, preferably to about 20,000 and more preferably to about 15,000, as measured by GPC, taking into account only those peaks that represent molecular weights of 1000 or more.

The polydispersity (ratio of weight average molecular weight to number average molecular weight) of Component B is suitably from about 1 to about 4, preferably from about 1.5 to 2.5.

The epoxy curing catalyst (Component C) is one or more materials that catalyze the reaction of the epoxy resin(s) with the curing agent. It is preferably encapsulated or otherwise a latent type that becomes active only upon exposure to elevated temperatures. Among preferred epoxy catalysts are ureas such as p-chlorophenyl-N,N-dimethylurea (Monuron), 3-phenyl-1,1-dimethylurea (Phenuron), 3,4-dichlorophenyl-N,N-dimethylurea (Diuron), N-(3-chloro-4-methylphenyl)-N',N'-dimethylurea (Chlortoluron), 2,4'-methylene bis(phenyl dimethyl urea), 4, 4'-methylene bis(phenyl dimethyl urea) and 2,4- toluene bis(dimethyl urea), 2,6-toluene bis(dimethyl urea), the reaction product of dimethylamine with isophorone diisocyanate, tert-acryl- or alkylene amines like benzyldimethylamine, 2,4,6-tris(dimethylaminomethyl)phenol, piperidine or derivatives thereof, various aliphatic urea compounds such as are described in EP 1916272; C₁-C₁₂ alkylene imidazole or N-arylimidazoles, such as 2-ethyl-2-methylimidazol, or N-butylimidazol and 6-caprolactam. 2,4,6-tris(dimethylaminomethyl)phenol integrated into a poly(p-vinylphenol) matrix (as described in European patent EP 0 197 892), or 2,4,6-tris(dimethylaminomethyl)phenol integrated into a novolac resin, including those described in US 4,701,378, are suitable.

The curing agent (Component D) is selected together with Component C such that the adhesive exhibits a curing temperature of at least 60°C. The curing temperature preferably is at least 80°C, and may be at least 100°C, at least 120°C, at least 130°C or at least 140°C. It may be as high as, for example, 180°C. The "curing temperature" refers to the lowest temperature at which the structural adhesive achieves at least 30% of its lap shear strength (DIN ISO 1465:2009-07) at full cure within 2 hours. The lap shear strength at "full cure" is measured on a sample that has been cured for 30 minutes at 180°C, which conditions represent "full cure" conditions. Clean (degreased) 1.2 mm HC420LAD+Z100 galvanized steel substrates, a bond area of 10 x 25 mm and an adhesive layer thickness of 0.3 mm are suitable parameters for performing this evaluation.
The curing agent (Component D) is a compound that reacts with at least two epoxy groups to form a linkage between them. Suitable curing agents include materials such as boron trichloride/amine and boron trifluoride/amine complexes, dicyandiamide, melamine, diallylmelamine, guanamines such as dicyandiamide, methyl guanidine, dimethyl guanidine, trimethyl guanidine, tetramethyl guanidine, methylisobiguanidine, dimethylisobiguanidine, tetramethylisobiguandidine, heptamethylisobiguanidine, hexamethylisobiguanidine, acetoguanamine and benzoguanamine, aminotriazoles such as 3-amino-1,2,4-triazole, hydrazides such as adipic dihydrazide, stearic dihydrazide, isophthalic dihydrazide, semicarbazide, cyanoacetamide, and aromatic polyamines such as diaminodiphenylsulphones. The use of dicyandiamide, isophthalic acid dihydrazide, adipic acid dihydrazide and/or 4,4'-diaminodiphenylsulphone is particularly preferred.

Dicyandiamide (also known as DICY, dicyanodiamide, and 1- or 2-cyanoguanidine) is most preferred. DICY (CAS 461-58-5) has empirical formula C₂N₄H₄, molecular weight 84, and structural formula (II):

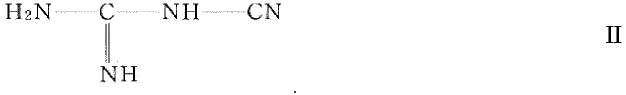

Component E) is one or more hardener. Any hardener suitable for a 2K epoxy adhesive composition may be used, in other words, the hardener of the present invention enables hardening of the epoxy adhesive composition at non-elevated temperatures. In one embodiment, the hardener of the present invention is capable of cross-linking with epoxy groups on the epoxy resin. Preferred hardeners include polymeric amines (polyamines) and polymeric amides (polyamides) (including, e.g., polyamidoamines), low molecular weight amines, and combinations thereof. Preferably, the hardener comprises one or more of a primary amine group, a secondary amine group, a mercapto group, and/or a phenol group.

One preferred polyamine includes a polyetheramine-epoxy adduct, that is, a reaction product of a stoichiometric excess of an amine prepolymer with an epoxy resin. The polyamine is preferably included in the hardener composition, more preferably only in the hardener composition. Polyamine hardeners tend to react more slowly than low molecular weight amines, but can add flexibility to the cured adhesive.

The amine prepolymer may be any amine prepolymer that has at least two amine groups in order to allow cross-linking to take place. The amine prepolymer comprises primary and/or secondary amine groups, and preferably comprise primary amine groups. Suitable amine prepolymers include polyether diamines and polyether triamines, and mixtures thereof. Polyether triamine is preferred. The polyether amines may be linear, branched, or a mixture. Branched polyether amines are preferred. Any molecular weight polyetheramine may be used, with molecular weights in the range of 200-6000 or above being suitable. Molecular weights may be above 1000, or more preferably above 3000. Molecular weights of 3000 or 5000 are preferred.

Suitable commercially available polyetheramines include those sold by Huntsman under the Jeffamine trade name. Suitable polyether diamines include Jeffamines in the D, ED, and DR series. These include Jeffamine D-230, D-400, D-2000, D-4000, HK-511, ED-600, ED-900, ED-2003, EDR-148, and EDR-176. Suitable polyether triamines include Jeffamines in the T series. These include Jeffamine T-403, T-3000, and T-5000. Polyether triamines are preferred, and polyether triamine of molecular weight about 5000 (e.g., Jeffamine T-5000) is most preferred. The equivalents of any of the above may also be used in partial or total replacement.

When a polyamide is included, any polyamide hardener may be used. Some preferred polyamides include reaction products of a dimerized fatty acid and a polyamine. Examples of such polyamides include those available from Cognis under the trade designations Versamid 115, Versamid 125 and Versamid.

Alternatively, the hardener may be a low molecular weight (non-polymeric) amine hardener. This component preferably acts as a cross-linking and/or chain-extending agent. Preferred cross-linking agents include primary and/or secondary amines.

Preferred cross-linking agents generally have molecular weights up to 300 g/mol, 250 g/mol or 200 g/mol. Preferred cross-linking agents generally have molecular weights of at least 48 g/mol or 60 g/mol. Some preferred molecular weights include 60 g/mol, 103 g/mol, 129 g/mol, and 170 g/mol. Some preferred cross-linking and/or chain extending agents include triethylenetetramine (TETA), diethylenetriamine (DETA), isophoronediamine (IPDA), and ethylenediamine.

The hardener should be used in suitable proportions and amounts to enable the combined parts of the inventive epoxy adhesive composition to cure/partially cure at a suitable temperature prior to a full cure heat treatment, for example such as during e-coating. The pre-curing temperature is preferably between 80°C and 120°C..

Unless otherwise specified, all wt% are based on the total weight of the epoxy adhesive composition (this refers to both the first as well as the second epoxy adhesive composition).

Component A) may constitute at least 20 wt%, at least 30 wt%, or at least 40 wt% of the total weight of the epoxy adhesive composition, and may constitute up to 80 wt%, up to 70 wt% or up to 60 wt% thereof.

Component B) may constitute at least 0.5 wt%, at least 2 wt%, at least 5 wt%, at least 10 wt% or at least 15 wt% of the total weight of the epoxy adhesive composition, and may constitute up to 40 wt%, up to 30 wt% or up to 25 wt% thereof.

Component C) may constitute at least 0.1 wt%, at least 0.25 wt% or at least 0.5 wt% of the total weight of components A-E, and may constitute, for example, up to 5 wt% up to 3 wt% or up to 2 wt% of the total weight of components A-E.

Component D) is present in an amount sufficient to consume at least 80% of the epoxide groups present in the composition. A large excess over that amount needed to consume all of the epoxide groups is generally not needed. Preferably, the curing agent constitutes at least 1 wt% of the adhesive, more preferably at least 2 wt% and even more preferably at least 3 wt%. The curing agent preferably may constitute up to about 15 wt% of the adhesive, up to about 10 wt% thereof, up to about 8 wt%, up to about 7 wt% thereof or up to about 5 wt% thereof.

Component E) is present in the second epoxy adhesive composition in one embodiment in an amount of equal to or greater than 1.5 wt%, more preferably equal to or greater than 3 wt%, more preferably equal to or greater than 9 wt% of the epoxy adhesive. Component E) is present in the epoxy adhesive composition in an amount equal to or less than 50 wt%, more preferably equal to or less than 34 wt%, more preferably equal to or less than 21 wt% of the epoxy adhesive composition.

The weight of components A-E may constitute, for example, 30 to 100%, 50 to 100%, 50 to 90% or 50 to 85% of the total weight of the adhesive. If components A-E constitute less than 100% of the total weight of the adhesive, the adhesive will also contain one or more optional ingredients.

Among the optional ingredients are one or more rubbers (different from Component B). These include, for example, a rubber-modified epoxy resin, *i.e.,* a compound having at least two epoxide groups separated by an aliphatic chain of at least 300 g/mol, preferably at least 500 g/mol. The aliphatic chain may be, for example, an alkylene group; an alkenyl group; a diene polymer or copolymer; or a polyether such as a poly(propylene oxide), a poly(ethylene oxide) or a copolymer of propylene oxide and ethylene oxide. Other rubber-modified epoxy resins include epoxidized fatty acids (which may be dimerized or oligomerized), and elastomeric polyesters that are modified to contain epoxy groups. The rubber-modified epoxy resin may have, prior to curing, a glass transition temperature of - 20°C or lower, preferably -30°C or lower.

The optional rubber may include core-shell rubber particles provided that if they are present at all, the core shell rubber particles constitute at most 7 percent of the total weight of the adhesive. Preferably the core-shell rubbers constitute no more than 5%, no more than 2.5% or no more than 1% of the total weight of the adhesive, and may be absent from the adhesive.

The adhesive used in the method of the present invention may contain one or more particulate fillers. The fillers are solids at the temperatures reached in the curing reaction. These fillers perform several functions, such as (1) modifying the rheology of the adhesive in a desirable way, (2) reducing overall cost per unit weight, (3) absorbing moisture or oils from the adhesive or from a substrate to which it is applied, and/or (4) promoting cohesive, rather than adhesive, failure. Examples of suitable mineral fillers include calcium carbonate, calcium oxide, talc, carbon black, textile fibers, glass particles or fibers, aramid pulp, boron fibers, carbon fibers, mineral silicates, mica, powdered quartz, hydrated aluminum oxide, bentonite, wollastonite, kaolin, fumed silica, silica aerogel, polyurea compounds, polyamide compounds, metal powders such as aluminum powder or iron powder and expandable microballoons. A mixture of filler that includes at least fumed silica and calcium oxide, and which may further include calcium carbonate, kaolin and/or wollastonite, can be used. Particulate fillers may constitute, for example, at least 5, at least 10 or at least 12% of the total weight of the adhesive, and may constitute up 35%, up to 30%, up to 25% or up to 20% thereof. If the mineral fillers include fumed silica, the adhesive may contain up to 10% by weight, preferably 1 to 6% by weight of fumed silica.

All or part of the mineral filler may be in the form of fibers having a diameter of 1 to 50 µm (D50, as measured by microscopy) and an aspect ratio of 6 to 20. The diameter of the fibers may be 2 to 30 µm or 2 to 16 µm, and the aspect ratio may be 8 to 40 or 8 to 20. The diameter of the fiber is taken as that of a circle having the same cross-sectional area as the fiber. The aspect ratio of the fibers may be 6 or more, such as 6 to 40, 6 to 25, 8 to 20 or 8 to 15.

Alternatively, all or part of the mineral filler may be in the form of low aspect ratio particles having an aspect ratio of 5 or less, especially 2 or less, and a longest dimension of up to 100 µm, preferably up to 25 µm.

Glass microballoons having an average particle size of up to 200 microns and density of up to 0.4 g/cc may be present in the adhesive of the invention. If present, these can be used in amounts of up to 5% of the total weight of the adhesive, and more preferably up to 2% or up to 1% thereof. Suitable microballoons include 3M^{®} Glass Bubbles K25, from 3M Corporation. Accordingly, in some embodiment, glass microballoons are present in an amount of no greater than 0.5% or no greater than 0.25% of the total weight of the adhesive, and may be absent.

A monomeric or oligomeric, addition polymerizable, ethylenically unsaturated material is optionally present in the adhesive composition. This material should have a molecular weight of less than about 1500. This material may be, for example, an acrylate or methacrylate compound, an unsaturated polyester, a vinyl ester resin, or an epoxy adduct of an unsaturated polyester resin. A free radical initiator can be included in the adhesive composition as well, in order to provide a source of free radicals to polymerize this material. The inclusion of an ethylenically unsaturated material of this type provides the possibility of effecting a partial cure of the adhesive through selective polymerization of the ethylenic unsaturation.

The adhesive can further contain other additives such as dimerized fatty acids, reactive diluents, pigments and dyes, fire-retarding agents, thixotropic agents, expanding agents, flow control agents, adhesion promoters and antioxidants. Suitable expanding agents include both physical and chemical type agents. The adhesive may also contain a thermoplastic powder such as polyvinylbutyral or a polyester polyol, as described in WO 2005/118734.

The adhesive preferably contains no more than 2 parts by weight of a plasticizer per part by weight of Component B). It may contain no more than 1 part, no more than 0.5 part or no more than 0.1 part of a plasticizer on the same basis, and may be devoid of a plasticizer. A plasticizer, for purposes of this invention, is a material that a) is a room temperature (23°C) liquid in which component A) is soluble at room temperature, b) has a molecular weight of at least 100 g/mol, c) has a boiling temperature of at least 150°C and d) lacks epoxide groups and epoxide-reactive groups. If a plasticizer is present, it preferably has a boiling temperature of at least 210°C. Examples of plasticizers include alkylsubstituted aromatic hydrocarbons such as alkyl naphthalenes, dialkyl naphthalenes, alkyl benzenes, dialkyl benzenes, and the like; phthalate esters, trimellitate esters, adipate esters, maleate esters, benzoate esters, terephthalate esters, various fatty acid esters, epoxidized vegetable oils, sulfonamides, alkyl citrates, acetylated monogylcerides, tricresyl phosphate, cresyl diphenyl phosphate, isopropylated triphenyl phosphate, 2-ethylhexyl diphenyl phosphate, isodecyl diphenyl phosphate, triphenyl phosphate, tributoxyethyl phosphate, and the like. In particular embodiments, the adhesive is devoid of a carboxylic acid ester plasticizer, a sulfonamide plasticizer and a phosphate ester plasticizer.

The epoxy adhesive composition used in the method of the present invention may be formed by a method to form an epoxy adhesive composition by mixing: i) a first component comprising: A) one or more epoxy resin wherein said one or more epoxy resin is a liquid at 23°C, B) one or more reactive urethane group- and/or urea group-containing polymer having capped isocyanate groups, C) an epoxy curing catalyst, and D)
dicyandiamide, with ii) a second component comprising: E) a hardener.

The innovative adhesive used in the invention can be applied to any part in a body shop. The adhesive can be applied using any suitable 2 component application technique using equipment with a static or dynamic mixing head. More preferred is the use of a dynamic mixing head. The first component of the adhesive composition may be a fully functional 1K body shop structural adhesive which can be applied without the second component (i.e., the hardener). In areas of the parts where a thermal pre-curing is applied by any method such as for example induction curing or IR pre-curing the inventive adhesive composition containing both components is applied. Also, for oven pre-curing processes at lower temperature this technology is applicable.

The adhesive composition (i.e., comprising the first and second components described above) can alternately be applied with the application of the first component alone. In this embodiment the second component is mixed in the desired feed ratio into the first component in the desired bond areas to allow for thermal pre-curing in these areas.

For the other areas the hardener (alternatively referred to as an accelerator paste or the second component) can be switched off again and the single first component can be used. Preferably, the application technique/equipment utilized dynamic mixing which enables fast mixing of the accelerator paste in the second component into the first component adhesive mixture.

The foregoing adhesive composition is formed into a layer at a bondline between two substrates to form an assembly, and the adhesive layer is cured at the bondline to form a cured adhesive bonded to each of the two substrates.

The adhesive can be applied to the substrates by any convenient technique. It can be applied cold or be applied warm if desired. It can be applied manually and/or robotically, using for example, a caulking gun, other extrusion apparatus, or jet spraying methods. Once the adhesive composition is applied to the surface of at least one of the substrates, the substrates are contacted such that the adhesive is located at a bondline between the substrates.

After application, the adhesive may be further cured by heating it to or above its curing temperature. Although lower temperatures can be used in some instances, particularly when longer curing times can be tolerated, it is generally preferable to perform the curing step by heating the adhesive to at least 130°C. The heating temperature may be as high as 220°C or more, but as an advantage of this invention is the lower curing onset temperature, the curing temperature preferably is up to 200°C, up to 180°C, up to 170°C or up to 165°C.

The present invention is a method to apply in a first step a first epoxy adhesive composition to a substrate wherein the composition comprises in admixture: A) one or more epoxy resin wherein said one or more epoxy resin is a liquid at 23°C, B) one or more reactive urethane group- and/or urea group-containing polymer having capped isocyanate, C) an epoxy curing catalyst, and D) a dicyandiamide followed by a second step comprising the application of a second epoxy adhesive composition to the substrate wherein the second epoxy adhesive composition comprises in admixture A) one or more epoxy resin wherein said one or more epoxy resin is a liquid at 23°C, B) one or more reactive urethane group- and/or urea group-containing polymer having capped isocyanate, C) an epoxy curing catalyst, D) dicyandiamide, and E) a hardener. Steps 1 and 2 may be repeated two or more times as necessary, for example 2, 3, 4, 5, 6, 7, 8, 9, up to as many as 20 times or more. In a preferred embodiment, components A), B), C), and D), of the first epoxy adhesive composition are the same as components A), B), C), and D) of the second epoxy adhesive composition wherein the hardener E) is mixed into the first epoxy adhesive compositing to make the second epoxy adhesive composition.

The adhesive can be used to bond a variety of substrates together including wood, metal, coated metal, a metal such as steel, zinc, copper, bronze, magnesium, titanium and/or aluminum, a variety of plastic and filled plastic substrates, fiberglass and the like. In one preferred embodiment, the adhesive is used to bond parts of automobiles together or to bond automotive parts onto automobiles.

The substrates can be different materials. Examples of substrate pairings include pairings of different metals such as steel and aluminum; steel and magnesium; and aluminum and magnesium; pairings of a metal such as steel, magnesium, aluminum or titanium with a polymeric material such as thermoplastic organic polymer or a thermoset organic polymer; and pairing of a metal such as steel aluminum, magnesium or titanium and a fiber composite such as a carbon-fiber composite or a glass fiber composite.

An application of particular interest is bonding of automotive or other vehicular frame components to each other or to other components.

Assembled automotive and other vehicular frame members often are coated with a coating material that requires a bake cure, for example e-coating. The coating is typically baked at temperatures that may range from 160°C to as much as 210°C. In such cases, it is often convenient to apply the epoxy adhesive composition used in the present invention in sufficient quantity and/or locations to the frame/components to hold them in place, then apply the coating, and then further cure the inventive adhesive and any other adhesive at the same time the coating is baked and cured. Between the steps of applying the epoxy adhesive composition of the present invention and optionally one or more additional epoxy adhesive composition (different than the composition used in the present ivnebtion) and applying the coating, the assembly substrates are held in a fixed position relative to each other by the inventive epoxy adhesive composition until the curing step is performed. In addition, mechanical means may be used as a fastening device. These include, for example, temporary mechanical means such as various types of clamps, bands and the like, which can be removed once the curing step is completed. The mechanical fastening means can be permanent, such as, for example, various types of welds, rivets, screws, and/or crimping methods. Alternatively, or in addition, the fastening can be done by spot-curing one or more specific portions of the adhesive composition to form one or more localized adhesive bonds between the substrates while leaving the remainder of the adhesive uncured until a final curing step is performed after the coating is applied.

The uncured adhesive may have a Casson plastic viscosity of at least 25 Pa, at least 50 Pa or at least 70 Pa, up to 1000 Pa, up to 700Pa, up to 400Pa or up to 200 Pa, at 45°C.

The cured adhesive forms a strong bond to various substrates.

The cured adhesive in some embodiments exhibits an unaged lap shear strength, measured on test samples prepared as in the following examples, of at least 12 MPa, at least 14 MPa or at least 16 MPa, up to 18 MPa.

### EXAMPLES

The following examples are provided to illustrate the invention and are not intended to limit the scope thereof. All parts and percentages are by weight unless otherwise indicated. The raw materials used in the adhesive and the hardener are shown in Table 1.

**Table 1**

| Component | Description | Supplier |
|---|---|---|
| D.E.R. 331 | Liquid D.E.R. Bis A based | Olin Corp. |
| D.E.R. 671 | Solid D.E.R. Bis A based | Olin Corp. |
| Solid-liquid epoxy resin mix | Blend of solid and liquid diglycidyl ethers of bisphenol A as described in US Publication No. 20080251203A1 and WO2016007324A1 | Olin Corp. |
| EP 49-10P2 | Phosphoric acid modified epoxy resin | ADEKA |
| ARALDITE DY-E | Monoglycidylether of C12-C14 alcohol | Huntsman |
| FLEXIBILIZER DY 965 | Polyurethane based toughener described in WO2016108958A1 | Huntsman |
| Toughener A | Polyurethane based toughener | Dow |
| DYNASYLAN GLYEO | Silane coupling agent | Evonik Industries |
| KANE ACE MX 156 | Core Shell rubber | Kaneka |
| STRUKTOL 3604 | CTBN | Schill und Seilach |
| OMICURE U-52M | Urea curing accelerator | Emerald |
| OMICURE U-35M | Urea curing accelerator | Emerald |
| AMICURE CG 120 G | DICY | Air Products |
| JEFFAMIN T-403 | Polyetheramine | Huntsman |
| JEFFAMIN D-400 | Polyether amine | Huntsman |
| LUPASOL P | Polyethylene imine | BASF |
| 4,7,10-Trioxatridecane-1,13-diamine | Oligoetheramine | BASF |
| TETA | Triethylentetramin | Huntsman |
| ATBN 1300 x 16 | Amine-terminated butadiene acrylonitrile | CVC |
| ARALDITE DW0133 | Red color | Huntsman |
| FLUORAD FC 4430 | Fluoro surfactant | 3M |
| ANCAMINE K54 | Catalyst | Evonik |
| AEROSIL 380 | Fumed silica | Evonik |
| OMYA BSH | Calcium Carbonate | Omya |
| NYAD | Wollastonite | NYCO |
| Talc 1N | Talc | Imerys |
| NYGLOS 8 | Wollastonite | NYCO |
| 3M GLASBUBBLES K25 | Hollow glass spheres | 3M |
| CHAUX VIVE | Calcium oxide | Lhoist |
| AEROSIL R208 | Hydrophobic fumed silica | Evonik |
| AEROSIL 805 | Hydrophobic fumed silica | Evonik |
| AEROSIL 380 | Hydrophilic fumed silica | Evonik |
| POTTERS BALLOTINI 2024 | Glass beads | Potters |
| MISTROFIL HS 40 | Talc | Imerys |
| RAM 1087 | Tris(diethylene glycol methylether) silyl propyleneglycidylether | Huntsman |
| PolyTHF 2000 | 2000g molecular weight polytetrahydrofuran | BASF |
| POLYVEST HT | 2800g molecular weight hydroxyl-terminated polybutadiene | Evonik |
| Hexamethylene diisocyanate (HDI) | | Sigma Aldrich |
| o,o'-Diallylbisphenol A (ODBA) | 2,2'-Diallylbisphenol A | Sigma Aldrich |
| Cardanol | | Cardolite |

Toughener A is an elastomeric toughener containing blocked isocyanate groups. It is prepared by mixing 50.41 parts of a 2000 molecular weight polytetrahydrofuran (PolyTHF 2000) and 16.81 parts of a 2800 molecular weight hydroxyl-terminated polybutadiene polymer (POLYVEST HT) at 120°C, cooling the mixture to 60°C, adding 12.58 parts of hexamethylene diisocyanate and a tin urethane catalyst and heating the resulting reaction mixture to 85°C for 45 minutes under nitrogen. Then, 7.09 parts of o,o'-diallylbisphenol A (ODBA) are added, and the mixture is stirred for 120 minutes under vacuum in a 100°C bath. 13.05 parts of cardanol are added and the mixture is stirred for 240 minutes under vacuum in a 105°C bath.

Examples 1 to 6 are epoxy resin formulations. Examples 1 and 4 are conventional structural adhesives, containing neither a latent curative such as dicyandiamide nor a catalyst. Examples 2 and 5 are the same formulation as Examples 1 and 4, respectively, with the incorporation of a catalyst. Examples 3 and 6 are same formulation as Examples 1 and 4, respectively, containing dicyandiamide in combination with a latent catalyst.

**Table 2**

| EXAMPLE | | 1 | 2 | 3 | 4 | 5 | 6 |
|---|---|---|---|---|---|---|---|
| COMPONENT | | | | | | | |
| | Solid-liquid epoxy resin mix | - | - | | 8.00 | 8.00 | 17.50 |
| | D.E.R 331 | 34.50 | 33.7 | 30.7 | 40.8 | 40 | 40 |
| | Toughener A | - | - | - | 18.00 | 18.00 | 18.00 |
| | FLEXIBILIZER DY 965 | 10 | 10 | 10 | - | - | 6.00 |
| | KANE ACE MX 156 | 30 | 30 | 30 | - | - | - |
| | DYNASYLAN GLYEO | 3.00 | 3.00 | 3.00 | 1 | 1 | 0.80 |
| | ARALDITE DW0133 | 0.50 | 0.50 | 0.50 | 0.50 | 0.50 | 0.60 |
| | AMICURE CG 1200G | - | - | 5.00 | - | | 3.60 |
| | OMICURE U52 | - | 0.80 | 0.80 | | 0.80 | 0.80 |
| | AEROSIL R208 | 5.0 | 5.0 | 5.0 | 5.0 | 5. 0 | 5.3 |
| | POTTERS BALLOTINI 2024 | 2.00 | 2.00 | 2.00 | 2.00 | 2.00 | 2.00 |
| | NYAD | 10.00 | 10.00 | 10.00 | 10.00 | 10.00 | 10.00 |
| | Talc 1N | 3.00 | 3.00 | 3.00 | 1.00 | 1.00 | 1.00 |
| | CHAUX VIVE | - | - | - | 8.00 | 8.00 | 8.00 |

| PROPERTY | | | | | | | |
|---|---|---|---|---|---|---|---|
| | Yield stress 45°C [Pa] | 432 | 466 | 450 | 378 | 294 | 308 |
| | Plastic Viscosity 45°C | 6 | 11 | 12 | 22 | 23 | 25 |

Hardener compositions used to pre-cure the epoxy resins (Examples 1 to 6) for fast fixation are shown in Table 3. Example 7 is a conventional 2K hardener composition designed to fully cure the epoxy component in a 2:1 mixture. Example 8 contains an amine terminated polyether polyol, and with 4,7,10-trioxatridecane-1,13-diamine a low molecular weight diamine, and about 60% of amine terminated toughener ATBN and 6% K54 as catalyst designed to pre-cure the epoxy component in a 4:1 mixture. Example 9 to 11 use differing amounts of TETA to achieve fast strength build up after induction curing. Examples 9 and 10 are designed to pre-cure the epoxy component in a 4:1 mixture and Example 11 is designed to pre-cure the epoxy component in a 10:1 mixture

**Table 3**

| EXAMPLE | | 7 | 8 | 9 | 10 | 11 |
|---|---|---|---|---|---|---|
| COMPONENT | | | | | | |
| | JEFFAMIN T-403 | 33 | 12 | - | - | |
| | 4,7,10-Trioxatridecane-1,13-diamine | 10 | 12 | - | - | |
| | TETA | - | - | 7 | 3 | 15.5 |
| | ODBA | - | - | 6 | - | 5 |
| | ATBN | 35 | 59 | 40 | 91 | 52 |
| | RAM 965 | - | - | - | - | - |
| | ANCAMINE K54 | 12 | 6 | 6 | 6 | 3 |
| | AEROSIL 380 | 6 | 5.5 | - | - | 5 |
| | GLASBUBBLES K25 | - | 1.5 | - | - | 1.5 |
| | OMYA BSH | - | - | 41 | - | - |
| | Talc 1N | 4 | - | - | - | - |
| | POTTERS BALLOTINI 2024 | - | 1 | - | - | - |
| | NYGLOS 8 | - | 8 | - | - | 10 |
| | CHAUX VIVE | - | 7 | - | - | 8 |

| PROPERTY | | | | | | |
|---|---|---|---|---|---|---|
| | Yield stress 45°C [Pa] | 350 | 159 | 2 | 0 | 340 |
| | Plastic Viscosity 45°C [Pas] | 2 | 33 | 35 | 40 | 25 |

The following tests are performed on the epoxy adhesive compositions:
"Rheology" is rotatory viscosity/yield stress and is determined on a Bohlin CS-50 Rheometer, C/P 20, up/down 0.1-20s⁻¹, evaluation according to Casson model; and
"Lap shear strength" is determined according to DIN EN 1465:2009-07 on DX 56 Z/DC 04 ZE, thickness 0.7 mm; re-greased with ANTICORIT PL 3802-39S. 10 x 25 mm bonded area, 0.3 mm adhesive layer thickness

Adhesion test samples are prepared as follows:
Metal strips of given steel grade are cleaned with heptane in an ultrasonic bath and re-greased by dip coating in a solution of heptane/ANTICORIT PL 3802-39S (9 / 1).

"Lap shear test specimens" are prepared by applying the adhesive composition to the strips. Glass beads (0.2 mm) are sprinkled onto the adhesive layer before overlaying the test strips; preferably 10 mm overlap. Metal clips are used to hold the two strips together during the baking cycle. Induction curing was performed for 1 min at 120°C. The heating to 120°C was achieved within 15s. All coupon/adhesive assemblies were cured to completion, at 180°C for 30 minutes or 165°C for 25min.

Table 4 summarize the composition (epoxy resin and hardener) and test results for the comparative examples, Examples 12 to 17, for mechanical performance. The lap shear strength testing on mild steel DX 56 Z/DC 04 ZE after 1 min Induction cure 120°C and after 25 min cure at 165°C in the oven.

**Table 4**

| | EXAMPLE | 12 | | 13 | | 14 | | 15 | | 16 | | 17 | |
|---|---|---|---|---|---|---|---|---|---|---|---|---|---|
| | | 12 a | 12 b | 13 a | 13b | 14 a | 14 b | 15 a | 15 b | 16 a | 16 b | 17 a | 17 b |
| COMPOSITION | | | | | | | | | | | | | |
| | Epoxy resin | Ex. 1 | Ex. 1 | Ex. 2 | Ex. 2 | Ex. 2 | Ex. 2 | Ex. 4 | Ex. 4 | Ex. 5 | Ex. 5 | Ex. 5 | Ex. 5 |
| | Hardener | none | Ex. 7 | none | Ex. 7 | none | Ex. 11 | none | Ex. 9 | none | Ex. 9 | none | Ex. 11 |
| | Epoxy:Hardener ratio | | 2:1 | | 2:1 | | 10:1 | | 4:1 | | 4:1 | | 10:1 |

| PROPERTIES | | | | | | | | | | | | | |
|---|---|---|---|---|---|---|---|---|---|---|---|---|---|
| | Lap shear strength [MPa] | 0 MPa | 0.6 MPa | 0 MPa | 0.3 MPa | 0 MPa | 0.1 MPa | 0 MPa | 5.4 MPa | 0 MPA | 4.5 MPa | 0 MPA | 1.0 MPa |
| | DX 56 Z / DC 04 ZE d = 0.8 mm Induction 120°C 1 min | | | | | | | | | | | | |
| | Lap shear strength [MPa] | 0 MPa | 16.2 MPa | 0 MPa | 17.5 MPa | 0 MPa | 14.8 MPA | 0 MPa | 14.8 MPa | 0 MPa | 15.9 MPa | 0 MPa | 11.9 MPa |
| | DX 56 Z / DC 04 ZE d = 0.8 mm 165°C 25 min | | | | | | | | | | | | |

The Examples 12 to 17 shown in Table 4 do not show the desired combination of lap shear strength build up in induction curing for fast fixation when applied with a curing accelerator (Examples 12b, 13b, 14b, 15b, 16b and 17 b) together with the full cure after application without accelerator in the oven at 165°C for 25 minutes (Examples 12a, 13a, 14a, 15a, 16a and 17a). The formulations void of any latent curative only result in a fast strength build up under induction curing at 120°C for 1 minute when applied with an accelerator/hardener component. After oven cure without application of an accelerator the final lap shear strength is insufficient.

Table 5 summarize the composition (epoxy resin and hardener) and test results for examples useful in the claimed method, Examples 18 to 23, for mechanical performance.

**Table 5**

| | EXAMPLE | 18 | | 19 | | 20 | | 21 | | 22 | | 23 | |
|---|---|---|---|---|---|---|---|---|---|---|---|---|---|
| | | 18 a | 18 b | 19 a | 19b | 20 a | 20 b | 21 a | 21 b | 22 a | 22 b | 23 a | 23 b |
| COMPOSITION | | | | | | | | | | | | | |
| | Epoxy resin | Ex. 3 | Ex. 3 | Ex. 3 | Ex. 3 | Ex. 6 | Ex. 6 | Ex. 6 | Ex. 6 | Ex. 6 | Ex. 6 | Ex. 6 | Ex. 6 |
| | Hardener component | none | Ex. 9 | none | Ex. 11 | none | Ex. 8 | none | Ex. 9 | none | Ex. 10 | none | Ex. 11 |
| | Epoxy:Hardener ratio | | 4:1 | | 10:1 | | 4:1 | | 4:1 | | 4:1 | | 10:1 |

| PROPERTIES | | | | | | | | | | | | | |
|---|---|---|---|---|---|---|---|---|---|---|---|---|---|
| | Lap shear strength [MPa] | 0 MPa | 4.3 MPa | 0 MPa | 0.2 MPa | 0 MPa | 0.7 MPa | 0 MPa | 7.1 MPa | 0 MPa | 1.4 MPa | 0 MPa | 1.6 MPa |
| | DX 56 Z / DC 04 ZE d = 0.8 mm | | | | | | | | | | | | |
| | Induction 120°C 1 min | | | | | | | | | | | | |
| | Lap shear strength [MPa] | 15.7 MPa | 16.6 MPa | 15.7 MPa | 15.6 MPa | 18.0 MPa | 15.8 MPa | 18.0 MPa | 16.2 MPa | 18.0 MPa | 16.2 MPa | 18.0 MPa | 16.9 MPa |
| | DX 56 Z / DC 04 ZE d = 0.8 mm 165°C 25 min | | | | | | | | | | | | |

Example 18 a and 19a is epoxy resin Example 3 applied without accelerator paste showing no handling strength with inductive curing and a full cure with high lap shear strength after oven curing conditions of 165°C for 25min. Example 18b is epoxy resin Example 3 applied with Example 9 accelerator which demonstrates strength building during the induction process at 120°C for 1 min reaching handling strength of 4.3 MPa. Example 19b is epoxy resin Example 3 applied with Example 11 hardener (containing higher amounts of TETA than Example 10) in a 10:1 mixing ratio which demonstrates a handling strength of 0.2 MPa after the induction process. After the oven cure, both Examples 18b and 19b yield full cured product with a good lap shear strength. Examples 20a, 21a, 22a and 23a are epoxy resin Example 6 applied without accelerator paste showing no handling strength with inductive curing and a full cure with high lap shear strength after oven curing conditions of 165°C for 25min. Examples 20b, 21b, 22b and 23b are epoxy resin Example 6 applied with accelerator pastes (Examples 8 to 11, respectively) showing handling strengths of 0.7 to 7.1 MPa with inductive curing and a full cure with high lap shear strength after oven curing conditions of 165°C for 25min.

## Claims

1. A method to apply a first epoxy adhesive composition and second epoxy adhesive composition to a substrate comprising the steps of:
1) applying the first epoxy adhesive composition to a substrate wherein the composition comprises in admixture:
A) one or more epoxy resin wherein said one or more epoxy resin is a liquid at 23°C,
B) one or more reactive urethane group- and/or urea group-containing polymer having capped isocyanate,
C) an epoxy curing catalyst,
and
D) a dicyandiamide
and
2) applying the second epoxy adhesive composition to the substrate wherein the second epoxy adhesive composition comprises in admixture:
A) one or more epoxy resin wherein said one or more epoxy resin is a liquid at 23°C,
B) one or more reactive urethane group- and/or urea group-containing polymer having capped isocyanate,
C) an epoxy curing catalyst,
D) dicyandiamide,
and
E) a hardener,
wherein both epoxy adhesive compositions have a lap shear strength according to DIN EN 1465:2009-07 of equal to or greater than 15 MPa after curing for 25 minutes at 165°C both measured on the combination of hot dip galvanized steel DX56D 0.8 mm thick and electro galvanized steel DC 04 in a thickness of 0.8 mm (DIN EN 10346:2015-10).

2. The method of Claim 1 wherein steps 1 and 2 are repeated two or more times.

3. The method of Claim 1 or 2 wherein components A), B), C), and D), of the first epoxy adhesive composition are the same as components A), B), C), and D) of the second epoxy adhesive composition further comprising the step, between step 1 and step 2, of mixing the hardener E) into the first epoxy adhesive compositing to make the second epoxy adhesive composition.

4. The method of any one of Claims 1 to 3, wherein component A comprises a diglycidyl ether of a bisphenol.

5. The method of any one of Claims 1 to 4, wherein capped isocyanate groups of component B are capped with a monophenol or polyphenol.

6. The method of any one of Claims 1 to 5, wherein component C includes a urea compound.

7. The method of any one of Claims 1 to 6, wherein component E comprises one or more of a primary amine group, a secondary amine group, a mercapto group, and/or a phenol group.

## Patentansprüche

1. Verfahren zum Aufbringen einer ersten Epoxidklebstoffzusammensetzung und zweiten Epoxidklebstoffzusammensetzung auf ein Substrat, umfassend die Schritte des:
1) Aufbringens der ersten Epoxidklebstoffzusammensetzung auf ein Substrat, wobei die Zusammensetzung in Beimengung Folgendes umfasst:
A) ein oder mehrere Epoxidharze, wobei das eine oder die mehreren Epoxidharze bei 23 °C eine Flüssigkeit ist/sind,
B) ein oder mehrere reaktive Urethangruppen und/oder Harnstoffgruppen enthaltende Polymer(e), das/die verkapptes Isocyanat aufweist/aufweisen,
C) einen Epoxidaushärtungskatalysator
und
D) ein Dicyandiamid
und
2) Aufbringens der zweiten Epoxidklebstoffzusammensetzung auf das Substrat, wobei die zweite Epoxidklebstoffzusammensetzung in Beimengung Folgendes umfasst:
A) ein oder mehrere Epoxidharze, wobei das eine oder die mehreren Epoxidharze bei 23 °C eine Flüssigkeit ist/sind,
B) ein oder mehrere reaktive Urethangruppen und/oder Harnstoffgruppen enthaltendes Polymer(e), das/die verkapptes Isocyanat aufweist/aufweisen,
C) einen Epoxidaushärtungskatalysator,
D) Dicyandiamid
und
E) ein Härtemittel,
wobei beide Epoxidklebstoffzusammensetzungen eine Überlappungsscherfestigkeit nach DIN EN 1465:2009-07 von gleich oder höher als 15 MPa nach 25 Minuten langem Aushärten bei 165 °C aufweisen, die beide auf der Kombination von 0,8 mm dickem feuerverzinktem Stahl DX56D und elektrisch verzinktem Stahl DC 04 in einer Dicke von 0,8 mm (DIN EN 10346:2015-10) gemessen werden.

2. Verfahren nach Anspruch 1, wobei die Schritte 1 und 2 zweimal oder mehr wiederholt werden.

3. Verfahren nach Anspruch 1 oder 2, wobei die Komponenten A), B), C) und D) der ersten Epoxidklebstoffzusammensetzung dieselben wie die Komponenten A), B), C) und D) der zweiten Epoxidklebstoffzusammensetzung sind, ferner umfassend den Schritt, zwischen Schritt 1 und Schritt 2, des Mischens des Härtemittels E) in die erste Epoxidklebstoffzusammensetzung, um die zweite Epoxidklebstoffzusammensetzung herzustellen.

4. Verfahren nach einem der Ansprüche 1 bis 3, wobei die Komponente A einen Diglycidylether eines Bisphenols umfasst.

5. Verfahren nach einem der Ansprüche 1 bis 4, wobei verkappte Isocyanatgruppen der Komponente B mit einem Monophenol oder Polyphenol verkappt werden.

6. Verfahren nach einem der Ansprüche 1 bis 5, wobei die Komponente C eine Harnstoffverbindung umfasst.

7. Verfahren nach einem der Ansprüche 1 bis 6, wobei die Komponente E eine oder mehrere von einer primären Amingruppe, einer sekundären Amingruppe, einer Mercaptogruppe und/oder einer Phenolgruppe umfasst.

## Revendications

1. Procédé pour appliquer une première composition adhésive époxy et une deuxième composition adhésive époxy sur un substrat comprenant les étapes de :
1) application de la première composition adhésive époxy sur un substrat, où la composition comprend dans un mélange :
A) une ou plusieurs résines époxy où lesdites une ou plusieurs résines époxy sont un liquide à 23 °C,
B) un ou plusieurs polymères contenant un groupe uréthane et/ou un groupe urée réactifs présentant un isocyanate coiffé,
C) un catalyseur de durcissement d'époxy,
et
D) un dicyandiamide,
et
2) application de la deuxième composition adhésive époxy sur le substrat, où la deuxième composition adhésive époxy comprend dans un mélange :
A) une ou plusieurs résines époxy où lesdites une ou plusieurs résines époxy sont un liquide à 23 °C,
B) un ou plusieurs polymères contenant un groupe uréthane et/ou un groupe urée réactifs présentant un isocyanate coiffé,
C) un catalyseur de durcissement d'époxy,
D) un dicyandiamide,
et
E) un durcisseur,
dans lequel les deux compositions adhésives époxy ont une résistance au cisaillement de recouvrement selon DIN EN 1465 :2009-07 supérieure ou égale à 15 MPa après un durcissement pendant 25 minutes à 165 °C, les deux étant mesurées sur la combinaison d'un acier galvanisé à chaud DX56D de 0,8 mm d'épaisseur et d'un acier électro-galvanisé DC 04 en une épaisseur de 0,8 mm (DIN EN 10346 :2015-10).

2. Procédé selon la revendication 1, dans lequel les étapes 1 et 2 sont répétées deux fois ou plus.

3. Procédé selon la revendication 1 ou 2, dans lequel les composants A), B), C) et D) de la première composition adhésive époxy sont identiques aux composants A), B), C) et D) de la deuxième composition adhésive époxy comprenant en outre l'étape, entre l'étape 1 et l'étape 2, de mélange du durcisseur E) dans la première composition adhésive époxy pour fabriquer la deuxième composition adhésive époxy.

4. Procédé selon l'une quelconque des revendications 1 à 3, dans lequel le composant A comprend un diglycidyléther d'un bisphénol.

5. Procédé selon l'une quelconque des revendications 1 à 4, dans lequel les groupes isocyanates coiffés du composant B sont coiffés avec un monophénol ou un polyphénol.

6. Procédé selon l'une quelconque des revendications 1 à 5, dans lequel le composant C inclut un composé d'urée.

7. Procédé selon l'une quelconque des revendications 1 à 6, dans lequel le composant E comprend un ou plusieurs parmi un groupe amine primaire, un groupe amine secondaire, un groupe mercapto et/ou un groupe phénol.
